# EUROPÄISCHE PATENTSCHRIFT

(11) **EP 3 138 965 B1**
(45) Veröffentlichungstag und Bekanntmachung des Hinweises auf die Patenterteilung: **11.03.2020**
(21) Anmeldenummer: 16179932.5
(22) Anmeldetag: 18.07.2016
(51) Int. Cl.: E03B 7/04, F16K 15/06, F24D 17/00, F16K 31/00, E03B 7/07

(54) **TRINK- UND BRAUCHWASSERVERSORGUNGSEINRICHTUNG EINES GEBÄUDES UND REGULIERVENTIL HIERFÜR**
DRINKING AND USED WATER SUPPLYING DEVICE OF A BUILDING AND REGULATING VALVE FOR SAME
DISPOSITIF D'ALIMENTATION D'EAU POTABLE ET SANITAIRE D'UN BÂTIMENT ET SOUPAPE DE RÉGLAGE ASSOCIÉE

(30) Priorität: 07.09.2015 DE 202015006366 U
(43) Veröffentlichungstag der Anmeldung: 08.03.2017
(73) Patentinhaber: Gebr. Kemper GmbH + Co. KG Metallwerke, 57462 Olpe (DE)
(72) Erfinder: Fries, Stefan, 57462 Olpe (DE)
(74) Vertreter: Grünecker Patent- und Rechtsanwälte PartG mbB

(56) Entgegenhaltungen:
- EP-A1- 2 098 645
- AT-B- 228 018
- DE-U1- 29 805 921
- DE-U1- 29 823 960
- US-A1- 2009 145 490

## Beschreibung

Die vorliegende Erfindung betrifft ein Regulierventil mit den oberbegrifflichen Merkmalen von Anspruch 1. Ein solches Regulierventil ist aus AT 228018 B bekannt. Die vorliegende Erfindung betrifft ferner eine Trink- und Brauchwasserversorgungseinrichtung eines Gebäudes mit einem solchen Regulierventil.

Eine Versorgungseinrichtung mit einem Hausanschluss, der an das öffentliche Versorgungsnetz angeschlossen ist, und zumindest einer zu zumindest einem Verbraucher führenden Zirkulationsleitung ist beispielsweise aus der DE 10 2006 017 807 A1, EP 1 845 207 A1 oder EP 1 887 150 A1 bekannt. Die erfindungsgemäße Versorgungseinrichtung ist eine Versorgungseinrichtung für Warmwasser mit Zirkulationsein- und -auslässen für die Zirkulation des Warmwassers und einer Zirkulationspumpe, um das in der Zirkulationsleitung enthaltene Warmwasser zu zirkulieren. Die Zirkulationsleitung ist üblicherweise an einen Wärmeerzeuger oder eine andere Warmwasserquelle angeschlossen.

Die Zirkulation dient dazu, regelmäßig nahe an dem Verbraucher Warmwasser mit der gewünschten Warmwassertemperatur bereitzuhalten. In der Leitung stehendes Warmwasser würde erkalten, so dass beim Zapfen von Warmwasser an dem Verbraucher zunächst nicht das Warmwasser mit der gewünschten Temperatur ausgegeben würde. Durch dieses Erkalten würde außerdem ein Temperaturniveau erreicht, bei dem in Trinkwasser enthaltene Keime sich stark vermehren, wodurch das Trinkwasser nicht mehr uneingeschränkt zu gebrauchen wäre.

In einer solchen Warmwasserversorgungseinrichtung ist es erwünscht möglichst rasch relativ stark abgekühltes Warmwasser gegen erwärmtes Warmwasser aus der Warmwasserquelle der Versorgungseinrichtung auszutauschen. Daher ist eine Zirkulationsleitung einer solchen Warmwasserversorgungseinrichtung üblicherweise mit einem Regulierventil versehen, welches einen regelbaren Strömungswiderstand erzeugen kann.

Aus der AT 228 018 B ist ein Regulierventil bekannt, das einen Ventilsitz und einen Ventilkörper in Form eines Rohres aufweist. Der Ventilkörper ist über ein Gewinde in das Ventilgehäuse eingeführt und kann mit einem Werkzeug relativ zu dem Ventilsitz bewegt werden. Das den Ventilkörper bildende Rohr formt selbst an seinem Innenumfang einen Ventilsitz aus, gegen den ein Rückschlagventil in geschlossener Stellung von einer Feder gedrückt wird, sodass abhängig von der Strömungsrichtung verschiedene Strömungswiderstände erzeugt werden können. Die Regulierung erfolgt, indem das Rohr entweder zu dem Ventilsitz des Ventilgehäuses hin oder von diesem weg geschraubt wird.

Eine Zirkulationsleitung einer eingangs genannten Warmwasserversorgungseinrichtung ist üblicherweise mit einem thermischen Regulierventil versehen, welches üblicherweise mit Hilfe eines Dehnstoffelements, das sich bei Veränderung der Temperatur dehnt oder zusammenzieht, den Strömungswiderstand selbstständig reguliert. Zumeist regelt das thermische Regulierventil in einem niedrigen Temperaturbereich einen relativ hohen Kv-Wert ein und in einem hohen Temperaturbereich einen relativ kleinen Kv-Wert, so dass der Durchfluss bei relativ hohen Temperaturen gering gehalten und der Durchfluss bei relativ geringen Temperaturen hoch gehalten wird, um möglichst rasch relativ stark abgekühltes Warmwasser gegen erwärmtes Warmwasser aus der Warmwasserquelle der Versorgungseinrichtung auszutauschen. Als niedrige Temperaturen werden dabei Warmwassertemperaturen unter 50°C angesehen. Hohe Temperaturen liegen über diesem Grenzwert.

Das thermische Regulierventil befindet sich üblicherweise am Ende eines Stranges, der als Teil der Zirkulationsleitung ausgebildet ist und üblicherweise mehrere in der Vertikalen übereinander oder Horizontalen nebeneinander angeordnete Verbraucher versorgt. Aus der zuvor erwähnten DE 10 2006 017 807 A1 ist ein System bekannt, bei dem solche an einem Strang angeschlossene Verbraucher jeweils über eine Ringleitung an den Strang angeschlossen sind. Die Ringleitung geht von dem Strang ab und mündet in den Strang. Zwischen dem Ausleiten aus dem Strang und dem Zurückleiten aus der Ringleitung in den Strang ist üblicherweise ein Strömungswiderstandselement vorgesehen, so dass die Ringleitung zwangsläufig durchströmt wird, wenn sich aufgrund einer Wasserentnahme in dem Strang eine Strömung ergibt. Die die Strömung in der Ringleitung bei einer Durchströmung des Stranges bewirkenden Vorrichtungen sind beispielsweise in EP 1 882 784 A1, EP 2 167 740 A1 oder EP 2 098 647 A1 der vorliegenden Anmelderin beschrieben.

Die zuvor diskutierten Lösungen zur zwangsläufigen Durchströmung einer Trink- und Brauchwasserversorgungseinrichtung folgen aus Überlegungen zur erhöhten Sauberkeit des Trink- und Brauchwassers. Sie sollen insbesondere auch eine Verkeimung verhindern. Gewünscht ist ein zumindest zyklischer Austausch des gesamten Wassers innerhalb der Trink- und Brauchwasserversorgungseinrichtung. Die entsprechenden Bemühungen führen auch zu einem Bedarf an entsprechend angepasst ausgebildeten Komponenten für die Trink- und Brauchwasserversorgungseinrichtung.

Die vorliegende Erfindung will ein Regulierventil angeben, welches in verbesserter Weise den technischen Anforderungen genügt, die durch möglichst keimfreies Trink- und Brauchwasser durch permanenten Austausch von Wasser in entsprechenden Versorgungseinrichtungen gestellt sind. Ferner will die Erfindung eine verbesserte Trink- und Brauchwasserversorgungseinrichtung angeben.

Zur Lösung dieses Problems wird mit der vorliegenden Erfindung ein Regulierventil mit den Merkmalen von Anspruch 1 angegeben. Dieses Regulierventil ist ein Regulierventil für Warmwasser-Zirkulationssysteme. Das Regulierventil hat ein Ventilgehäuse, welches als Metallgussbauteil oder als Kunststoffteil ausgebildet sein kann. In dieses Ventilgehäuse ist ein durch die Wassertemperatur gesteuertes Thermostatelement als Stellelement für ein Regelglied eingebaut. Das Regelglied wirkt mit einer Durchflussöffnung zwischen Eingangs- und Ausgangskanal des Ventilgehäuses zusammen, um die Wasserdurchflussmenge durch das Regulierventil und die daran angeschlossene Leitung zu regeln. Es ist ferner üblicherweise eine Stellvorrichtung zur Voreinstellung des Regelgliedes vorgesehen. Ein solches Regulierventil ist beispielsweise aus der EP 1 372 054 A1, der DE 100 56 715 A1 oder der DE 298 05 921 U1 bekannt.

Das erfindungsgemäße Regulierventil hat ein richtungsabhängiges Regelelement, das bei einer Durchströmung des Regulierventils in einer Richtung den Kv-Wert des Regulierventils unabhängig von der Stellung des Stellgliedes erhöht und bei einer Durchströmung des Regulierventils in entgegengesetzter Richtung keine Erhöhung des Kv-Wertes bewirkt. Das richtungsabhängige Regelelement erlaubt dementsprechend durch Erhöhung des Kv-Wertes eine Durchströmung des Regulierventils in der einen Richtung, üblicherweise allein aufgrund der diese Durchströmung in der einen Richtung bewirkenden Druckdifferenz. Aufgrund dieser Druckdifferenz macht das richtungsabhängige Regelelement auf, so dass in dieser einen Richtung Wasser auch dann relativ ungehindert durch das Regulierventil hindurchströmen kann, wenn das Stellglied lediglich eine geringe oder gar minimale gegebenenfalls auch ein thermisch gesteuertes Absperren des Regulierventils vorgibt.

Wie bereits zuvor erwähnt, wirkt das richtungsabhängige Regelelement üblicherweise lediglich aufgrund derjenigen Druckdifferenz, die die Durchströmung des Regulierventils in der einen oder der anderen Richtung bewirkt. So hat das richtungsabhängige Regelelement üblicherweise einen Regulierkörper, der unter Vorspannung an einem Dichtsitz anliegt, und bei einer die Durchströmung in der einen Richtung bewirkenden Druckdifferenz aufgrund dieser Druckdifferenz von dem Dichtsitz abhebt und somit den Kv-Wert des Regulierventils gegenüber dem vorherigen Zustand erheblich erhöht. Als erhebliche Erhöhung ist dabei eine Erhöhung des Kv-Wertes gegenüber dem geschlossenen Zustand um zumindest 50%, bevorzugt um zumindest 75%, besonders bevorzug um zumindest 100%.

Die den Kv-Wert erhöhende Strömung in der einen Strömungsrichtung kann dabei mit Hilfe eines in dem Ventilgehäuse ausgesparten Bypass erfolgen. Dieser Bypass ist zur Überbrückung des Ventilsitzes in dem Ventilgehäuse vorgesehen. Unter Überbrückung des Ventilsitzes ist insbesondere zu verstehen, dass bei einer Durchströmung des Regulierventils in einer Richtung der Teil der Strömung, welcher durch den Bypass gelangt, nicht durch die Öffnung, welche von dem Ventilsitz definiert wird, gelangt. Üblicherweise bildet der Bypass für die Strömung einen alternativen Weg innerhalb des Ventilgehäuses. Das richtungsabhängige Regelelement ist in dem Bypass montiert und kontrolliert so richtungsabhängig die Durchströmung des Bypasses, d. h. ermöglicht die Durchströmung des Bypasses in der einen Strömungsrichtung und verhindert üblicherweise vollständig eine Durchströmung in entgegengesetzter Richtung.

Dabei kann das richtungsabhängige Regelelement vorzugsweise durch eine RV-Patrone, d. h. eine an sich bekannte Rückflussverhindererpatrone ausgebildet sein. Diese Ausgestaltung bietet den Vorteil, dass Standardbauteile zur Herstellung des erfindungsgemäßen Regulierventils verbaut werden können. Die RV-Patrone ist dabei dichtend in den Bypass eingesetzt. Bevorzugt ist die RV-Patrone mit dem Ventilgehäuses verrastet. Hierzu weist üblicherweise das Gehäuse der RV-Patrone, welches mit Wandungen des Ventilgehäuses zusammenwirkt, vorspringende Rastnasen auf, die in Verriegelungsnuten des Ventilgehäuses eingreifen, wenn die RV-Patrone in den Bypass eingeschoben wird. Im verrasteten Zustand ist die RV-Patrone dichtend in das Ventilgehäuse eingesetzt und dort fixiert.

Gemäß einer alternativen Ausgestaltung der vorliegenden Erfindung ist das Regelglied selbst als richtungsabhängiges Regelelement ausgebildet. Dabei wird das Regelglied zum Einen durch das Thermostatelement als Stellglied gestellt. Zusätzlich ist das Regelglied so ausgebildet, dass dieses aufgrund der wirkenden Strömungsrichtung bzw. Druckdifferenz innerhalb des Ventilgehäuses die Durchflussöffnung im Bereich des Ventilsitzes vermehrt freigibt, wenn das Wasser in der einen Richtung einströmt, hingegen üblicherweise das Regelglied seine Position, die durch das Thermostatelement eingestellt ist, nicht verändert, wenn das Wasser in entgegengesetzter Richtung strömt. Dazu ist vorzugsweise das Regelglied entgegen der einen Strömungsrichtung vorgespannt gehalten. So kann die Warmwasserströmung beim Fließen in der einen Strömungsrichtung das Regelglied entgegen der Vorspannkraft bewegen und damit die Durchflussöffnung in vermehrtem Maße freigeben. Die Vorspannkraft ist dabei so eingestellt, dass das Regelglied bei dem zu erwartenden Strömungsdrücken der zuzulassenden Versorgungsströmung in der einen Richtung diese Durchflussöffnung zwischen sich und dem Ventilsitz vergrößert. Die Vorspannkraft wird dabei vorzugsweise durch eine Feder, insbesondere eine Schraubenfeder bewirkt.

Weiterhin ist vorzugsweise ein Anschlag vorgesehen, gegen den das vorgespannt gehaltene Regelglied bei einer Durchströmung in der entgegengesetzten Richtung anliegt. Durch diese Ausgestaltung wird sichergestellt, dass das Regelglied relativ zu dem Stellglied in vorbestimmter Ausrichtung und Anordnung gehalten ist, wenn das Warmwasser in der entgegengesetzten Richtung fließt. Die Anlage des Regelgliedes gegen den Anschlag durch die Vorspannkraft wird dabei üblicherweise auch dann erreicht, wenn überhaupt keine Strömung gegeben ist, d. h. wenn beispielsweise das Regulierventil noch nicht eingebaut ist. Der Anschlag ist bevorzugt unmittelbar an dem Stellglied ausgebildet.

Mit Blick auf eine genaue Einstellung der Temperatur durch das thermostatische Regulierventil wird gemäß einer bevorzugten Weiterbildung vorgeschlagen, das Regelglied durch die Durchflussöffnung hindurchführbar auszubilden. Die Durchflussöffnung ist dementsprechend zumindest geringfügig größer als das Regelglied, was einerseits eine genauere Einstellung eines minimalen Strömungsvolumens bei hoher Warmwassertemperatur, gegebenenfalls auch einen Anstieg des Volumenstroms zur thermischen Desinfektion bei sehr hohen Wassertemperaturen größer 70°C durch entsprechende Konturierung des Regelgliedes erlaubt. Ebenso kann das Regulierventil so ausgebildet sein, dass ein Zurückfedern des Regelgliedes bei Durchströmung in der einen Richtung dazu führt, dass das Regelglied die Durchflussöffnung durchsetzt und dementsprechend die Durchflussöffnung vermehrt freigibt.

Das erfindungsgemäße Regulierventil ist vorzugsweise in einer Trink- und Brauchwasserversorgungseinrichtung eingebaut, die für sich erfindungswesentlich sein kann und in Anspruch 10 angegeben ist. Statt eines solchen einheitlich mit einem richtungsabhängigen Regelelement ausgebildeten Regulierventils kann aber ein übliches thermostatisches Regulierventil in die Trink- und Brauchwasserversorgungseinrichtung und parallel zu einem richtungsabhängigen Regelelement der vorstehend beschriebenen Art eingebaut werden. Auch damit wird eine Ausgestaltung bewirkt, bei welcher bei einer Durchströmung des Regulierventils in einer Richtung eine Erhöhung des Kv-Wertes über das Regulierventil unabhängig von der Stellung des Stellgliedes erhöht wird, wohingegen der Kv-Wert bei einer Durchströmung in entgegengesetzter Richtung keine Erhöhung erfährt. Als Erhöhung des Kv-Wertes über das Regulierventil wird dabei derjenige Kv-Wert erachtet, dessen Eingangsgrößen in Strömungsrichtung vor und hinter der Einheit aus parallel geschaltetem Regulierventil und richtungsabhängigem Regelelement ermittelt werden. Hierzu gehört zuvorderst die Druckdifferenz über die parallel geschalteten Elemente. Bei dieser Ausgestaltung kann das Regulierventil ein handelsübliches thermostatisches Regulierventil zur thermostatischen Regulierung der Zirkulation in einer Trink- bzw. Brauchwasserversorgungseinrichtung sein. Diese hat Rückflussverhinderer, die an dem Einlass und dem Auslass der Zirkulationsleitung vorgesehen und so angeordnet sind, dass sowohl von der Einlassseite als auch von der Auslassseite Warmwasser in die Zirkulationsleitung strömen kann. Die Zirkulationsleitung hat dementsprechend bevorzugt einen Nenndurchmesser, der dem Nenndurchmesser einer Versorgungsleitung entspricht (DN20 oder größer). Jeder Zweig der Zirkulationsleitung von dem Einlass zu dem Verbraucher einerseits bzw. von dem Auslass zu dem Verbraucher andererseits kann dementsprechend als Zuleitung zu dem Verbraucher genutzt werden. Die Rückflussverhinderer ermöglichen jeweils eine gerichtete Strömung von einem Warmwasserreservoir entweder von der Einlassseite oder der Auslassseite her zu dem Verbraucher. In an sich bekannter Weise ist zu der Zirkulationsleitung eine Zirkulationspumpe vorgesehen. Allerdings sind Zirkulationsein- und -auslässe für die Zirkulation des Warmwassers vorgesehen, die üblicherweise als Zirkulationszu- und -ableitungen parallel zu den Ein- und Auslässen verwirklicht sind und dementsprechend auch mit geringerer Nennweite (beispielsweise DN15 oder kleiner) ausgebildet sein können. Durch diese Zirkulationsein- und -auslässe erfolgt die übliche Zirkulation zur Aufrechterhaltung der Warmwassertemperatur innerhalb der Zirkulationsleitung. Auch diese Zirkulationsein- und -auslässe sind üblicherweise mit Rückflussverhinderern vorgesehen, um eine nur in einer Richtung gerichtete Strömung durch die Zirkulationsleitung zu erlauben. Dabei gehen die Ein- und Auslässe der Zirkulation, die Versorgungsleitungen sind, wie auch der Zirkulations-Einlass üblicherweise von einer einheitlichen Warmwasserversorgungsleitung ab, wohingegen der Zirkulations-Auslass mit kleiner Nennweite an die Warmwasseraufbereitung angeschlossen ist, um erkaltetes Warmwasser zu erhitzen und für den Warmwasserverbrauch oder die Zirkulation zur Verfügung zu stellen. Das zuvor erwähnte erfindungsgemäße Regulierventil bzw. die Einheit aus thermostatischem Regulierventil und parallel dazu angeordnetem richtungsabhängigen Regelelement ist dabei zwischen den ein- und auslassseitigen Rückflussverhinderern vorgesehen. Üblicherweise befindet sich das Regulierventil bzw. die Einheit am Ende eines Stranges, der mehrere Verbraucher, bevorzugt mehrere jeweils zu den Verbrauchern führende Ringleitungen versorgt. So ist es möglich, bei Wasserentnahme durch einen der Verbraucher Warmwasser in der Zirkulationsrichtung und/oder entgegen der Zirkulationsrichtung dem Verbraucher zuzuleiten. Bei einer Zuleitung entgegen der Zirkulationsrichtung, die die "eine Richtung" in dem obigen Sinne darstellt, wird der Kv-Wert über das Regulierventils schlagartig erhöht, so dass das entgegen der Zirkulationsrichtung zu dem Verbraucher zugeführte Brauchwasser wesentlich ungehinderter das Regulierventil passieren kann. Wird der Bezug von Wasser aus der Zirkulationsleitung gestoppt, so wird der Kv-Wert durch Schließen des richtungsabhängigen Regelelementes auf den ursprünglichen Wert zurückgefahren. Der Kv-Wert ist relativ gering. Das thermostatisch gestellte Stellglied regelt abhängig von der Temperatur des Warmwassers den Durchtritt des Warmwassers in Zirkulationsrichtung durch das Regulierventil. Wird indes das verbrauchte Warmwasser in Zirkulationsrichtung dem Verbraucher zugeleitet, ergibt sich eine Strömung zwischen dem Einlass der Zirkulationsleitung und dem Verbraucher, d. h. das Warmwasser wird in Strömungsrichtung vor dem Regulierventil abgeleitet. Das Regulierventil kann den allein durch das Thermostatelement gestellten Zustand beibehalten.

Weitere Einzelheiten und Vorteile der vorliegenden Erfindung ergeben sich aus der nachfolgenden Beschreibung eines Ausführungsbeispiels in Verbindung mit der Zeichnung. In Dieser zeigen:
- Fig. 1: ein Ausführungsbeispiel einer Trink- und Brauchwasserversorgungseinrichtung;
- Fig. 2: eine Längsschnittansicht eines ersten Ausführungsbeispiels eines Regulierventils;
- Fig. 3: das in Fig. 2 gezeichnete Detail in vergrößerter Darstellung bei geschlossenem richtungsabhängigem Regelelement;
- Fig. 4: die Darstellung nach Fig. 3 bei geöffnetem Regelelement;
- Fig. 5: eine Darstellung entsprechend den Fig. 3 und 4 für ein alternatives Ausführungsbeispiel bei geschlossenem richtungsabhängigem Regelelement und
- Fig. 6: das Ausführungsbeispiel nach Fig. 5 bei geöffnetem richtungsabhängigem Regelelement.

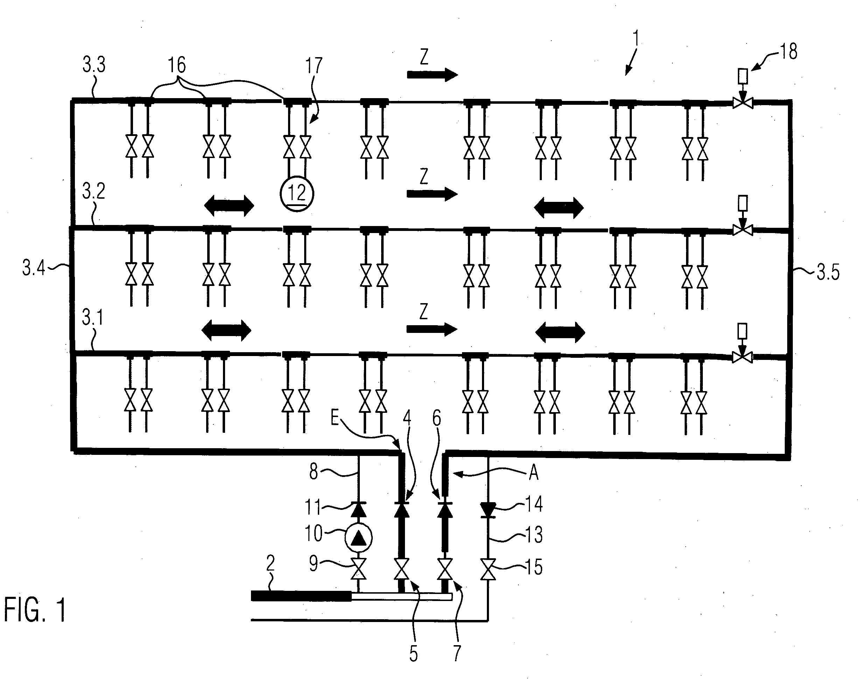

Die Fig. 1 zeigt eine schematische Ansicht eines Ausführungsbeispiels einer Trink- und Brauchwasserversorgungseinrichtung 1 eines nicht näher gezeigten Gebäudes. Das Gebäude hat einen nicht gezeigten Hausanschluss, der an das öffentliche Versorgungsnetz angeschlossen ist, um das Gebäude mit Frischwasser zu versorgen. Bei diesem Frischwasser handelt es sich üblicherweise um Kaltwasser, was regelmäßig innerhalb des Gebäudes zu warmem Trink- bzw. Brauchwasser aufbereitet wird. Dazu hat das Gebäude eine Therme sowie üblicherweise einen Speicher zum Bevorraten einer gewissen Menge von Warmwasser.

Von diesen Komponenten für die Warmwasseraufbereitung geht eine zentrale Versorgungsleitung 2 ab. Mit Bezugszeichen 3 ist eine Zirkulationsleitung gekennzeichnet, die bei dem gezeigten Ausführungsbeispiel in mehrere horizontal auf verschiedenen Stockwerken verlegte Stockwerksstränge 3.1, 3.2 und 3.3 aufgeteilt ist, die parallel zueinander verlegt sind. So hat die Zirkulationsleitung 3 einen einheitlichen Steigstrang 3.4 und einen einheitlichen Fallstrang 3.5. Der Steigstrang 3.4 ist über einen an einem Einlass E vorgesehenen Rückflussverhinderer 4 und ein Absperrventil 5 mit der Versorgungsleitung 2 verbunden. Der andere Strang 3.5 ist an einem Auslass A über entsprechende Einrichtungen 6, 7 an die Versorgungsleitung 2 angeschlossen. Die Rückflussverhinderer 4, 6 sind dabei so ausgestaltet, dass sie ein Einbringen von Warmwasser von der Versorgungsleitung 2 in die Zirkulationsleitung 3 jeweils zulassen, eine umgekehrte Strömung indes blockieren. Die zuvor erwähnten Leitungen, d. h. die Versorgungsleitung 2 und zumindest die Stränge 3.4 und 3.5 haben eine Nennweite von DN20 und größer und sind als Versorgungsleitung ausgelegt. Dabei nimmt der Nenndurchmesser der Zirkulationsleitung 3 üblicherweise ausgehend von dem Einlass E jedenfalls von einem Abzweig, der zu einer der Stockwerksstränge 3.1, 3.2, 3.3 bis in etwa zur Mitte der entsprechenden Stränge 3.1, 3.2, 3.3 führt, ab. Im mittleren Bereich des Stockwerkstranges kann der Durchmesser auf bis zu DN15 reduziert werden. Er nimmt nach dieser engsten Stelle wieder in Richtung auf den Auslass zu.

Mit Bezugszeichen 8 ist eine Zirkulationszuleitung gekennzeichnet, die eine geringere Nennweite hat, beispielsweise eine Nennweite von DN15 und in die ein Absperrventil 9, eine Zirkulationspumpe 10 und ein Rückflussverhinderer 11 in dieser Reihenfolge zwischengeschaltet sind. Durch die Zirkulationspumpe 10 und den Rückflussverhinderer 11 wird eine Zirkulationsströmung bewirkt, die dafür sorgt, dass nahe von Verbrauchern 12 jederzeit warmes Wasser ansteht und zwar auch dann, wenn längere Zeit kein Wasser aus der Versorgungseinrichtung 1 entnommen wurde. Die durch die Zirkulationspumpe 10 bewirkte Zirkulationsströmung ist zu den entsprechenden Stockwerkssträngen 3.1 bis 3.3 mit Pfeil Z gekennzeichnet.

An dem in Zirkulationsrichtung strömungsfernen Ende des Stranges 3.5 ist eine Zirkulationsableitung 13 angeschlossen, die über einen Rückflussverhinderer 14 und ein Absperrventil 15 zu der Warmwasseraufbereitung innerhalb des Gebäudes führt. Der Rückflussverhinderer 14 verhindert, dass von dort beim Bezug von Brauchwasser über einen Verbraucher 12 der Einrichtung 1 Wasser aus der Warmwasseraufbereitung entgegen der Zirkulationsrichtung Z abgezogen wird.

Mit Bezugszeichen 16 sind Strömungsteiler gekennzeichnet, die in der auf die hiesige Anmelderin zurückgehenden EP 1 882 784 A1, EP 2 167 740 A1 oder EP 2 098 647 A1 ausführlicher beschrieben sind. Auf die Offenbarung dieser Offenlegungsschriften wird zur Vermeidung von Wiederholungen verwiesen. Der Inhalt dieser Offenlegungsschriften wird zumindest insofern in den Offenbarungsgehalt der vorliegenden Anmeldung aufgenommen. Die Strömungsteiler 16 bewirken eine Zirkulation innerhalb einer mit Bezugszeichen 17 gekennzeichneten und zu dem Verbraucher 12 führenden Ringleitung bei jedweder Strömung innerhalb des zugeordneten Stockwerksstranges 3.1, 3.2 bzw. 3.3. So sind die Strömungsteiler 16 vorzugsweise so ausgebildet, wie dies die EP 2 098 647 B1 der vorliegenden Anmelderin beschreibt.

Hinter dem in Zirkulationsrichtung Z letzten Strömungsteiler 16 ist ein Regulierventil 18 zwischengeschaltet, welches nachstehend noch näher erläutert werden wird. Zu jedem Strang 3.1, 3.2 und 3.3 ist ein solches Regulierventil 18 vorgesehen.

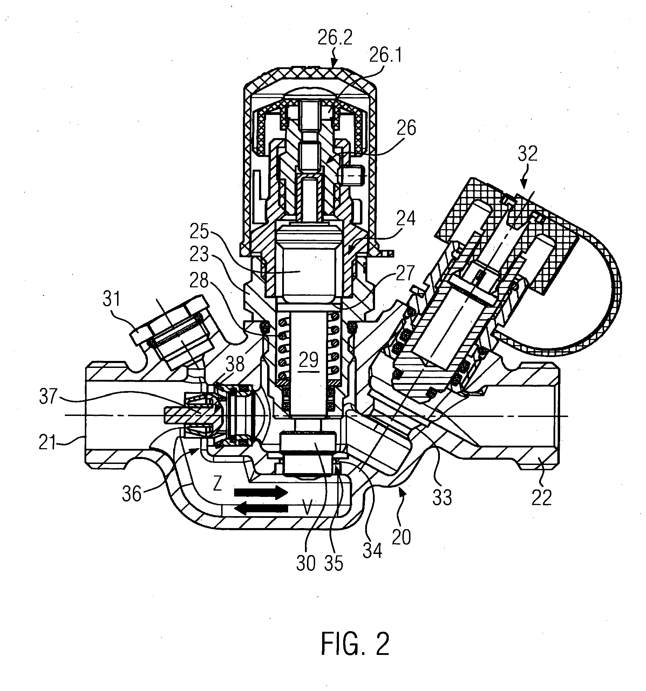

Einzelheiten des Regulierventils 18 sind in Fig. 2 verdeutlicht.

Das Regulierventil 18 hat ein Ventilgehäuse 20 mit einem Anschluss 21 für eine Speiseleitung und einem Anschluss 22 für eine Abgabeleitung. Die Speiseleitung entspricht dabei den jeweiligen Stockwerkssträngen 3.1, 3.2 bzw. 3.3, wohingegen die Abgabeleitung Teil des Fallstranges 3.5 ist. Auch in Fig. 2 ist mit dem Pfeil Z die Zirkulationsrichtung angegeben. Mit dem Pfeil V ist die Versorgungsströmung angegeben, auf die nachstehend noch näher eingegangen wird.

Das Ventilgehäuse 20 bildet eine stutzenförmige Aufnahme 23 für einen mit Bezugszeichen 24 gekennzeichneten Ventileinsatz aus. Die Aufnahme 23 wird durch ein Ventiloberteil gebildet, welches mit seinem Außengewinde in ein Innengewinde des Ventilgehäuses 20 eingeschraubt ist. Der Ventileinsatz 24 hat eine Aufnahme für ein Dehnstoffelement 25 eines Thermostatreglers 26. Das Dehnstoffelement 25 wirkt auf einen Teller 27 ein, der gegen die Kraft einer Feder 28 in Richtung auf das Dehnstoffelement 25 vorgespannt gehalten ist. Mit dem Teller 27 ist ein Stößel 29 gekoppelt, der ein Regelglied 30 trägt. Durch Verschrauben einer Verstellkappe 26.1 des Thermostatreglers 26 kann der Stößel 29 und damit das Thermostatventil voreingestellt werden. In Figur 2 ist diese Verstellkappe 26.1 von einer Schutzkappe 26.2 überzogen.

Das Ventilgehäuse 20 bildet ferner einen Anschlussstutzen zum dichtenden Verschrauben eines Entleerungsstopfens 31 aus. Des Weiteren ist ein Absperrventil 32 vorgesehen, welches handbetätigbar ist, um das Regulierventil 18 durch Anlegen des Absperrventils 32 gegen einen Geradsitz 33 manuell abzusperren.

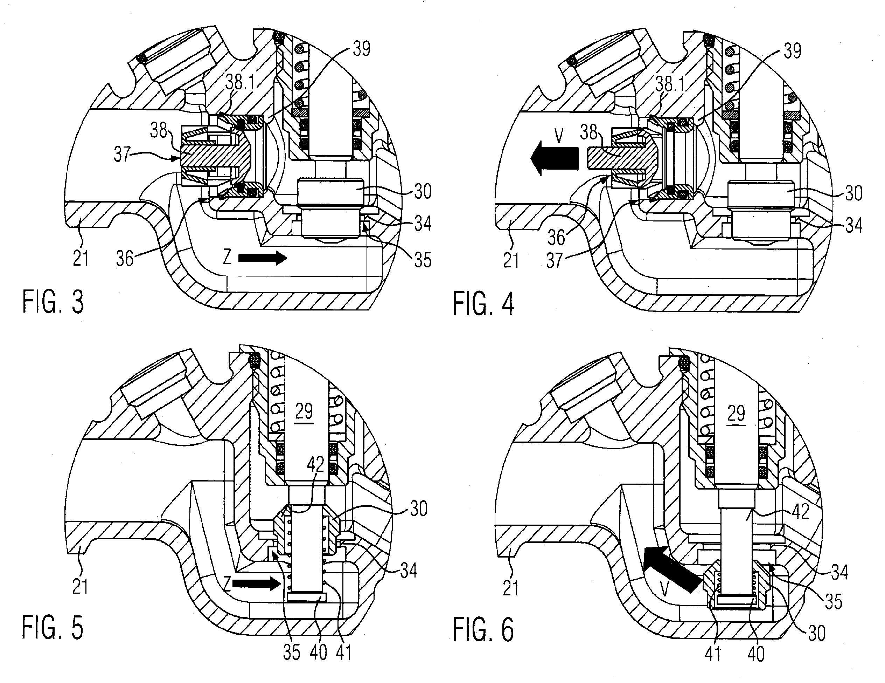

Weitere Details des Regulierventils 18 sind in den Fig. 3 und 4 dargestellt, auf die nachfolgend Bezug genommen wird.

Das Ventilgehäuse 20 bildet einen mit Bezugszeichen 34 gekennzeichneten Ventilsitz aus, der zwischen sich und dem Regelglied 30 eine Durchflussöffnung 35 freilässt. In den Figuren 3 und 4 ermöglicht diese Durchflussöffnung 35 einen Zirkulations-Volumenstrom. Das Ventilgehäuse 20 formt ferner in Verlängerung des Anschlusses 21 einen Bypass 36 aus, der als Durchgangsbohrung zwischen dem Stößel 29 und dem Anschluss 21 ausgeformt ist. In diesen Bypass 36 ist eine RV-Patrone 37 mit einem federvorgespannt gehaltenen Ventilkappe 38 vorgesehen. Die RV-Patrone 37 ist dichtend in den Bypass 36 eingesetzt. Das Ventilgehäuse 20 bildet eine Umfangsnut aus, in welcher Rastvorsprünge 38.1 der RV-Patrone 37 in Eingriff sind, um die RV-Patrone 37 zu verriegeln, die auf der gegenüberliegenden Seite gegen einen durch das Ventilgehäuse 20 geformten Ringvorsprung 39 anliegt. Die RV-Patrone 37 ist gegenüber dem Ventilgehäuse 20 außenumfänglich abgedichtet.

Die RV-Patrone 37 bildet ein Ausführungsbeispiel eines richtungsabhängigen Regelelements im Sinne der vorliegenden Erfindung. Bei einer Zirkulationsströmung Z gemäß Fig. 3 verschließt die RV-Patrone 37 den Bypass 36.

Wird indes das Regulierventil 18 von der gegenüberliegenden Seite durchströmt, d. h. erfolgt eine Einleitung von Warmwasser durch die Auslassseite A und damit den Anschluss 22, so öffnet sich die RV-Patrone 37 und lässt eine Versorgungsströmung V durch. Diese Versorgungsströmung V überbrückt im Wesentlichen die Durchflussöffnung 35. Durch das Öffnen der RV-Patrone 37 gemäß Fig. 4 wird der Kv-Wert des Regulierventils 18 schlagartig erhöht. Dabei ergibt sich bei einer Strömung in Figur 2 von links nach rechts, d.h. von den Anschluss 21 zum Anschluss 22 ein Kv-Wert bei einer Druckdifferenz ΔP von 100 mbar über das thermostatische Regulierventil und bei einem Nenndurchmesser der angeschlossenen Rohre von 15 mm von etwa 130 Liter pro Stunde. Wird hingegen das Ausführungsbeispiel nach Figur 2 in entgegengesetzter Richtung durchströmt, so erlaubt die RV-Patrone 37 einen Volumenstrom bei der gleichen Druckdifferenz von etwa 1400 Liter pro Stunde. Das Regulierventil 18 erlaubt dementsprechend trotz einer allein durch das Thermostatregler 26 gering eingestellten Durchströmung durch die Durchflussöffnung 35 einen nahezu ungehinderten Durchsatz des Warmwassers durch das Regulierventil 18. Erfolgt indes eine Wasserentnahme durch einen Verbraucher 12, der nahe des Steigstranges 3.4 angeordnet ist, so wird das zu entnehmende Brauchwasser über den Einlass E und dementsprechend den Steigstrang 3.4 in der üblichen Weise zugeleitet. Die dabei wirkende Druckdifferenz muss nicht notwendigerweise zu einer Verringerung des Kv-Wertes des Regulierventils 18 und zu einer Versorgungsteilströmung durch dieses Regulierventil 18 in Richtung auf den entsprechenden Verbraucher führen.

Mit diesem Kenntnisstand ergeben sich folgende Strömungsverhältnisse in dem Ausführungsbeispiel der Trink- und Brauchwasserversorgungseinrichtung gemäß Fig. 1: Durch die Zirkulationspumpe 10 wird ein Zirkulationsstrom erzeugt. Dieser wird innerhalb der einzelnen Stockwerksstränge 3.1 bis 3.3 durch die temperaturbedingte Stellung des Regelgliedes 30 über das Thermostat- bzw. Dehnstoffelement 25 als Stellglied und damit abhängig von der jeweiligen Wassertemperatur in dem Strang 3.1 bis 3.3 geregelt. Wird dabei in einer Nasszelle über einen Verbraucher 12 Warmwasser gezapft, kann durch beide Stränge 3.4, 3.5, d. h. sowohl in Zirkulationsrichtung Z als auch entgegen der Zirkulationsrichtung Z Warmwasser zu diesem Verbraucher 12 geführt werden. Sind die Druckverhältnisse innerhalb der Vorrichtung derart, dass aufgrund der Druckdifferenz eine Versorgung auch oder ausschließlich über den Strang 3.5 erfolgt, öffnet sich das richtungsabhängige Regelungselement in Form der RV-Patrone 37. Der Kv-Wert des Regulierventils 18 wird schlagartig erhöht (Fig. 4). Wird der Zapfvorgang an dem entsprechenden Verbraucher 12 beendet, stellt sich an dem Regulierventil wieder der vorherige Betriebszustand ein, bei dem die Zirkulationsströmung Z in dem jeweiligen Stockwerksstrang 3.1 bis 3.2 reguliert wird (Fig. 3). Dabei hat das Regulierventil 18 einen erheblich kleineren Kv-Wert.

Ein alternatives Ausführungsbeispiel zu dem Ausführungsbeispiel nach den Figuren 3 und 4 ist in den Figuren 5 und 6 gezeigt. Bei dieser Ausgestaltung hat der Stößel 29 endseitig eine Ringschulter 40, die an einem endseitig in dem Stößel 29 eingeschraubten Stopfen versehen ist. Die Ringschulter 40 trägt eine Schraubenfeder 41, die das Regelglied 30 gegen einen mit Bezugszeichen 42 gekennzeichneten und an dem Stößel 29 verwirklichten Anschlag anlegt. Diese in Fig. 5 gezeigte Stellung ergibt sich jedenfalls dann, wenn das Regulierventil 18 allein die Zirkulationsströmung Z führt.

Wird wie bei dem zuvor beschriebenen Ausführungsbeispiel eine Versorgungsströmung V gewünscht, so drückt die diese Versorgungsströmung bewirkende Druckdifferenz das Regelglied 30 entgegen der Feder 41 zusammen. Das Regelglied 30 wird durch die Durchflussöffnung 35 hindurchgeführt. Das Regelglied 30 befindet sich nun gegenüber Fig. 5 auf einer anderen Seite relativ zu dem Ventilsitz 34, d. h. hat die Durchfluss-Öffnung 35 durchsetzt. Der freie Durchgang durch die Durchflussöffnung 35 ist deutlich vergrößert, so dass die Versorgungsströmung V im Wesentlichen ungehindert das Regulierventil 18 passieren kann.

### Bezugszeichenliste

- 1: Trink- und Brauchwasserversorgungseinrichtung
- 2: Versorgungsleitung
- 3: Zirkulationsleitung
- 3.1: Stockwerksstrang
- 3.2: Stockwerksstrang
- 3.3: Stockwerksstrang
- 3.4: Steigstrang
- 3.5: Fallstrang
- 4: Rückflussverhinderer
- 5: Absperrventil
- 6: Rückflussverhinderer
- 7: Absperrventil
- 8: Zirkulationszuleitung
- 9: Absperrventil
- 10: Zirkulationspumpe
- 11: Rückflussverhinderer der Zirkulationszuleitung
- 12: Verbraucher
- 13: Zirkulationsableitung
- 14: Rückflussverhinderer
- 15: Absperrventil der Zirkulationsableitung
- 16: Strömungsteiler
- 17: Ringleitung
- 18: Regulierventil
- 20: Ventilgehäuse
- 21: Anschluss für die Speiseleitung
- 22: Anschluss für die Ableitung
- 23: Stutzenförmige Aufnahme
- 24: Ventileinsatz
- 25: Dehnstoffelement
- 26: Thermostatregler
- 26.1: Verstellkappe
- 26.2: Schutzkappe
- 27: Teller
- 28: Feder
- 29: Stößel
- 30: Regelglied
- 31: Entleerungsstopfen
- 32: Absperrventil
- 33: Geradsitz des Absperrventils
- 34: Ventilsitz
- 35: Durchflussöffnung
- 36: Bypass
- 37: RV-Patrone
- 38: Ventilkörper
- 38.1: Rastvorsprünge
- 39: Ringvorsprung
- 40: Ringschulter
- 41: Schraubenfeder
- 42: Anschlag
- A: Auslass
- E: Einlass
- V: Versorgungsströmung
- Z: Zirkulationsströmung

## Patentansprüche

1. Regulierventil (18) für Warmwasser-Zirkulationssysteme, mit einem Ventilgehäuse (20), einem Regelglied (30), das mit einem Ventilsitz (34) mit einer Durchflussöffnung (35) zwischen Eingangs- und Ausgangskanal (21, 22) des Ventilgehäuses (20) zur Regelung der Wasserdurchflussmenge zusammenwirkt, und einem richtungsabhängigen Regelelement (37; 41, 30), das bei einer Durchströmung (V) des Regulierventils (18) in einer Richtung den Kv-Wert des Regulierventils (18) unabhängig von der Stellung eines Stellgliedes für das Regelglied erhöht und bei einer Durchströmung des Regulierventils (18) in entgegengesetzter Richtung keine Erhöhung des Kv-Wertes bewirkt, **dadurch gekennzeichnet, dass** in das Ventilgehäuse (20) ein durch die Wassertemperatur gesteuertes Thermostatelement (25) als das Stellglied für das Regelglied (30) eingebaut ist.

2. Regulierventil nach Anspruch 1, **gekennzeichnet durch** einen innerhalb des Ventilgehäuses (20) ausgesparten Bypass (36) zur Überbrückung des Ventilsitzes (34), wobei das richtungsabhängige Regelelement (37) in dem Bypass (36) montiert ist.

3. Regulierventil nach Anspruch 2, **dadurch gekennzeichnet, dass** das richtungsabhängige Regelelement als RV-Patrone (37) ausgebildet und dichtend in dem Bypass (36) eingesetzt ist.

4. Regulierventil nach Anspruch 3, **dadurch gekennzeichnet, dass** die RV-Patrone mit dem Ventilgehäuse (20) verrastet ist.

5. Regulierventil nach Anspruch 1, **dadurch gekennzeichnet, dass** das Regelglied (30) als das richtungsabhängige Regelelement ausgebildet ist.

6. Regulierventil nach Anspruch 5, **dadurch gekennzeichnet, dass** das Regelglied (30) entgegen der einen Durchströmungsrichtung (V) vorgespannt gehalten ist und dass eine die Vorspannung bewirkende Vorspannkraft so eingestellt ist, dass sich die Durchflussöffnung (35) zwischen dem Regelglied (30) und dem Ventilsitz (34) bei Durchströmung in der einen Durchströmungsrichtung (V) vergrößert.

7. Regulierventil nach Anspruch 5 oder 6, **gekennzeichnet durch** einen Anschlag (42), gegen den das vorgespannt gehaltene Regelglied (30) bei einer Durchströmung in der entgegengesetzten Richtung anliegt.

8. Regulierventil nach einem der vorherigen Ansprüche, **dadurch gekennzeichnet, dass** das Regelglied (30) durch die Durchflussöffnung (35) hindurchführbar ist.

9. Regulierventil nach einem der vorherigen Ansprüche, **dadurch gekennzeichnet, dass** das Regelglied (30) mit einer Stellvorrichtung (26) zur Voreinstellung des Regelgliedes (30) versehen ist.

10. Trink- und Brauchwasserversorgungseinrichtung (1) eines Gebäudes mit einem Hausanschluss, der an das öffentliche Versorgungsnetz angeschlossen ist; zumindest einer zu zumindest einem Verbraucher (12) führenden Zirkulationsleitung (3), die ein- und auslassseitig mit Rückflussverhinderern (4, 6) versehen ist, die so angeordnet sind, dass von der Einlassseite (E) und der Auslassseite (A) der Zirkulationsleitung (3) Warmwasser in die Zirkulationsleitung (3) strömen kann, der eine Zirkulationspumpe (10) und Zirkulationsein- und -auslässe (8; 13) für die Zirkulation von Warmwasser durch die Zirkulationsleitung (3) zugeordnet sind und die zwischen den ein- und auslassseitigen Rückflussverhinderern (4, 6) mit zumindest einem zwischen der Einlassseite (E) und der Auslassseite (A) in der Zirkulationsleitung eingebauten Regulierventil (18) nach einem der Ansprüche 1 bis 8 versehen ist; sowie mit einer Stellvorrichtung (26) zur Voreinstellung des Regelgliedes (30), zu welchem das richtungsabhängige Regelelement (37; 41, 30) parallel in der Zirkulationsleitung geschaltet ist.

11. Trink- und Brauchwasserversorgungseinrichtung (1) nach Anspruch 10, **dadurch gekennzeichnet, dass** mehrere Verbraucher (12) hintereinander an die Zirkulationsleitung (3) angeschlossen sind und das verschiedene Verbraucher (12) jeweils über eine von der Zirkulationsleitung abgehende und in diese mündende Ringleitung (17) an die Zirkulationsleitung (3) angeschlossen sind.

## Claims

1. Regulating valve (18) for hot-water circulation systems, comprising a valve housing (20), a regulation member (30) which cooperates with a valve seat (34) with a flow opening (35) between inlet and outlet channel (21, 22) of the valve housing (20) for regulating the water flow rate, and a direction-dependent regulation element (37; 41, 30) which with a flow (V) through the regulating valve (18) in one direction increases the flow coefficient Cᵥ of the regulating valve (18) independently of the position of a setting member for the regulation member (30) and with a flow through the regulating valve (18) in opposite direction does not cause an increase of the flow coefficient Cᵥ, **characterized in that** a thermostatic element (25) which is controlled by water temperature is installed into the valve housing (20) as the setting member for the regulation member (30).

2. Regulating valve according to claim 1, **characterized by** a bypass (36) recessed within the valve housing (20) for bridging the valve seat (34), wherein the direction-dependent regulation element (37) is mounted in the bypass (36).

3. Regulating valve according to claim 2, **characterized in that** the direction-dependent regulation element is configured as a CV cartridge (37) and is sealingly inserted in the bypass (36).

4. Regulating valve according to claim 3, **characterized in that** the CV cartridge is locked with the valve housing (20).

5. Regulating valve according to claim 1, **characterized in that** the regulation member (30) is configured as the direction-dependent regulation element.

6. Regulating valve according to claim 5, **characterized in that** the regulation member (30) is kept preloaded against the one flow direction (V) and that a preload force causing the preload is set such that the flow opening (35) between the regulation member (30) and the valve seat (34) enlarges upon flow in the one direction (V).

7. Regulating valve according to claim 5 or 6, **characterized by** a stop (42) on which the regulation member (30) which is held in a preloaded state abuts in case of a flow in the opposite direction.

8. Regulating valve according to any one of the preceding claims, **characterized in that** the regulation member (30) can be passed through the flow opening (35).

9. Regulating valve according to any one of the preceding claims, **characterized in that** the regulation member (30) is provided with a setting device (26) for presetting the regulation member (30).

10. Drinking and service water supply device (1) of a building with a house connection connected to the public supply network, at least one circulation pipe (3) leading to at least one consumer (12), which is provided at the inlet and outlet side with backflow preventers (4, 6) which are arranged such that hot water can flow from the inlet side (E) and the outlet side (A) of the circulation pipe (3) into the circulation pipe (3) which has assigned thereto a circulation pump (10) and circulation inlets and outlets (8; 13) for the circulation of hot water through the circulation pipe (3) and which, between the inlet-side and outlet-side backflow preventers (4, 6), is provided with at least one regulating valve according to any one of claims 1 through 8 (18) which is installed between the inlet side (E) and the outlet side (A) in the circulation pipe; and with a setting device (26) for presetting the regulation member (30), the direction-dependent regulation element (37, 41, 30) being connected in parallel with the regulation member (30) in the circulation pipe.

11. Drinking and service water supply device (1) according to claim 10, **characterized in that** plural consumers (12) are connected one after the other to the circulation pipe (3), and that various consumers (12) are each connected to the circulation pipe (3) via a ring pipe (17) which branches off from the circulation pipe and ends in said pipe.

## Revendications

1. Soupape de commande (18) pour des systèmes de circulation d'eau chaude, comprenant un corps de soupape (20), un élément de commande (30) coopérant avec un siège de soupape (34) ayant un orifice d'écoulement (35) entre des canaux d'entrée et de sortie (21, 22) du corps de soupape (20) pour commander le débit d'eau, et un élément de commande directionnelle (37; 41, 30) qui, lors du passage (V) de la soupape de commande (18) dans un sens, augmente la valeur Kv de la soupape de commande (18) indépendamment de la position d'un actionneur pour l'élément de commande et ne provoque pas d'augmentation de la valeur Kv lorsque la soupape de commande (18) est traversée dans le sens opposé, **caractérisé en ce**
**qu'**un élément thermostatique (25) commandé par la température de l'eau est installé dans le boîtier de soupape (20) comme servomoteur pour l'élément de réglage (30).

2. Soupape de commande selon la revendication 1, **caractérisée par** une dérivation (36) encastrée dans le boîtier de soupape (20) pour ponter le siège de soupape (34), dans laquelle l'élément de réglage de direction (37) est monté dans la dérivation (36).

3. Soupape de commande selon la revendication 2, **caractérisée en ce que** l'élément de réglage dépendant de la direction est réalisé sous forme de cartouche RV (37) et est inséré de manière étanche dans la dérivation (36).

4. Soupape de régulation selon la revendication 3, **caractérisée en ce que** la cartouche RV est verrouillée au boîtier de soupape (20).

5. Soupape de commande selon la revendication 1, **caractérisée en ce que** l'élément de réglage (30) est sous forme d'un élément de commande directionnel.

6. Soupape de commande selon la revendication 5, **caractérisée en ce que** l'élément de réglage (30) est maintenu sous précontrainte contre une direction d'écoulement (V) et qu'une force de précontrainte provoquant la précontrainte est réglée de telle sorte que l'ouverture d'écoulement (35) entre l'élément de réglage (30) et le siège de soupape (34) augmente lorsque l'écoulement se fait dans une direction d'écoulement (V).

7. Soupape de commande selon la revendication 5 ou 6, **caractérisée par** une butée (42) contre laquelle l'élément de réglage précontraint (30) s'appuie lorsque l'écoulement se produit dans le sens opposé.

8. Soupape de commande selon l'une des revendications précédentes, **caractérisée en ce que** l'élément de réglage (30) peut être inséré à travers l'ouverture d'écoulement (35).

9. Soupape de régulation selon l'une des revendications précédentes, **caractérisée en ce que** l'élément de réglage (30) est muni d'un dispositif de réglage (26) pour le préréglage de l'élément de réglage (30).

10. Dispositif (1) d'alimentation en eau potable et en eau sanitaire d'un bâtiment avec un branchement domestique raccordé au réseau public d'alimentation; au moins une conduite de circulation (3) menant à au moins un consommateur (12), qui est pourvue, du côté de l'entrée et du côté de la sortie, de dispositifs anti-refoulement (4, 6) qui sont disposés de telle sorte que de l'eau chaude peut s'écouler dans la conduite de circulation (3) à partir du côté de l'entrée (E) et du côté de la sortie (A) de la conduite de circulation (3), laquelle conduite de circulation (3) comporte une pompe de circulation (10) et des entrées et sorties de circulation (8; 13) pour la circulation d'eau chaude dans la conduite de circulation (3) et qui est prévu entre les dispositifs anti-refoulement (4, 6) côté entrée et côté sortie avec au moins une soupape de régulation (18) installée entre le côté entrée (E) et le côté sortie (A) dans la conduite de circulation selon l'une des revendications 1 à 8; ainsi qu'avec un dispositif de réglage (26) pour le préréglage de l'élément de réglage (30), avec lequel l'élément de réglage (37 ; 41, 30) dépendant de la direction est monté en parallèle dans la conduite de circulation.

11. Dispositif d'alimentation en eau potable et en eau sanitaire (1) selon la revendication 10, **caractérisé en ce que** plusieurs consommateurs (12) sont raccordés en série à la conduite de circulation (3) et les différents consommateurs (12) sont chacun raccordés à la conduite de circulation (3) par l'intermédiaire d'une conduite annulaire (17) qui bifurque de la conduite de circulation et débouche dans celle-ci.
